# EUROPEAN PATENT APPLICATION

(11) **EP 4 753 012 A1**
(43) Date of publication of application: **03.06.2026**
(21) Application number: 24943243.6
(22) Date of filing: 16.12.2024
(51) Int. Cl.: H01M 10/42, H01M 50/503, H01M 50/528, H01M 50/516, H01M 50/531

(54) **BATTERY AND ELECTRONIC DEVICE**

(30) Priority: 11.06.2024 CN 202410750217
(71) Applicant: HUAWEI TECHNOLOGIES CO., LTD., Shenzhen 518129 (CN)
(72) Inventor: MO, Jiaqing, Shenzhen, Guangdong 518129 (CN); LI, Junhao, Shenzhen, Guangdong 518129 (CN); DENG, Zhiyuan, Shenzhen, Guangdong 518129 (CN); WANG, Xiaoying, Shenzhen, Guangdong 518129 (CN); CHEN, Hongqing, Shenzhen, Guangdong 518129 (CN)
(74) Representative: Thun, Clemens
(86) International application number: PCT/CN2024/139603
(87) International publication number: WO 2025/256091

(57) **Abstract**

A battery and an electronic device are provided. The battery includes an electrochemical cell and an FPC. No protection circuit is disposed on the electrochemical cell and the FPC. A first part of the FPC is stacked on a top seal in a width direction of the electrochemical cell, two second parts are formed by respectively extending from two ends of the first part, and second connection parts are respectively disposed at extension ends of the two second parts. One of the second connection parts is connected to a positive trace in the FPC, and the positive trace extends from the corresponding second connection part, through a corresponding second part, to a position opposite to a positive electrode tab. The other second connection part is connected to a negative trace in the FPC, and the negative trace extends from the corresponding second connection part, through a corresponding second part, to a position opposite to a negative electrode tab. At least two positive electrode tabs or at least two negative electrode tabs are disposed. In this way, both the positive trace and the negative trace in the FPC are arranged in a unipolar manner, so that a safety risk like fire caused by a sustained short circuit can be avoided, and link impedance of the FPC can be reduced.

## Description

This application claims priority to Chinese Patent Application No. 2024107502178, filed with the China National Intellectual Property Administration on June 11, 2024 and entitled "BATTERY AND ELECTRONIC DEVICE", which is incorporated herein by reference in its entirety.

### TECHNICAL FIELD

Embodiments of this application relate to the field of battery structure technologies, and in particular, to a battery and an electronic device.

### BACKGROUND

With development of technologies of mobile terminals such as mobile phones, a requirement for a light weight and thinness of products and a requirement for a battery life are increasing. Controlling a battery volume and improving battery energy density have become a key research and development direction in the industry, to obtain a high battery capacity in a space of a specific size. A lithium-ion battery is used as an example. When an internal resistance of the battery is appropriately controlled to effectively improve charging and discharging efficiency, a short-circuit risk usually needs to be avoided.

### SUMMARY

Embodiments of this application provide a battery and an electronic device, to resolve a battery short circuit problem through structure optimization.

A first aspect of embodiments of this application provides a battery. No protection circuit is disposed in the battery, the battery includes an electrochemical cell and an FPC, a head of the electrochemical cell has a top seal, a positive electrode tab and a negative electrode tab of the electrochemical cell separately extend out from the top seal, and at least two positive electrode tabs or at least two negative electrode tabs are disposed. The FPC includes a first part and two second parts, the first part is stacked on the top seal in a width direction of the electrochemical cell, a first connection part that is separately electrically connected to the positive electrode tab and the negative electrode tab is disposed on the first part, the two second parts are formed by respectively extending from two ends of the first part, and second connection parts are respectively disposed at extension ends of the two second parts. One of the second connection parts is connected to a positive trace in the FPC, to electrically connect to a positive voltage terminal on a main board, and the positive trace extends inward from the corresponding second connection part, through a corresponding second part, to a position that is of the first connection part and that is opposite to the positive electrode tab. The other second connection part is connected to a negative trace in the FPC, to electrically connect to a negative voltage terminal on the main board, and the negative trace extends inward from the corresponding second connection part, through a corresponding second part, to a position that is of the first connection part and that is opposite to the negative electrode tab. An inner extension end of the positive trace is spaced from an inner extension end of the negative trace. In this way, shunting is implemented by increasing a quantity of electrode tabs, which can reduce impact of high current density in a charging and discharging process. Both the positive trace and the negative trace in the FPC are arranged in a unipolar manner, so that problems such as a short circuit caused by tweezers, a short circuit caused by solder balls, or a short circuit caused by foreign objects on the FPC can be avoided, and a security risk like fire caused by a sustained short circuit is avoided.

In addition, in comparison with an implementation in which each of the two sides includes a positive trace and a negative trace, in this implementation, traces on both sides are unipolar, and there is no need to reserve a spacing for an opposite-polarity trace. In a same routing width, traces can be fully covered with copper, to effectively reduce link impedance on the FPC side of the battery.

In addition, no protection circuit is disposed on the electrochemical cell and the FPC. For a battery compartment with a space of a same size, a volume space of the battery compartment can be fully used to arrange the electrochemical cell, to improve a battery capacity, and effectively increase volume energy density of the battery.

For example, the electrochemical cell may be a dual-electrode-tab electrochemical cell including a positive electrode tab and a negative electrode tab, or may be a multi-electrode-tab electrochemical cell with an increased quantity of electrode tabs.

According to the first aspect, this embodiment of this application further provides a first implementation of the first aspect. In the width direction of the electrochemical cell, the positive electrode tab is located on one side of the top seal, and the positive electrode tab is located on the other side of the top seal. In this way, the positive electrode tab and the negative electrode tab are respectively located on two sides of the top seal, so that traces in the FPC can be appropriately controlled, to ensure that connectors on a same side and the FPC are designed to be of a same polarity, thereby implementing a single-side single-polar connection. This features a simple and reliable structure.

According to the first implementation of the first aspect, this embodiment of this application further provides a second implementation of the first aspect. One positive electrode tab may be disposed, and correspondingly, two negative electrode tabs are disposed. In this way, a quantity of negative electrode tabs is increased, so that under a same charging load, local current density of a negative electrode plate of the battery is reduced. This can effectively reduce a phenomenon of lithium plating near a welding area of the negative electrode tab of the battery.

For example, two positive electrode tabs may alternatively be disposed, and correspondingly, one negative electrode tab is disposed.

According to the first aspect, or the first implementation of the first aspect, or the second implementation of the first aspect, this embodiment of this application further provides a third implementation of the first aspect. The second connection part may be a BTB (board to board, board to board) connector disposed at the extension end of the second part. During actual application, positive and negative connection parts of the FPC are inserted and snap-fitted into a connector on the main board through a connector, to establish a reliable electrical connection of a corresponding signal interface. This also has good assembly process.

A second aspect of embodiments of this application provides an electronic device. The electronic device includes a main board and a battery, and the battery is the battery described above. Second connection parts disposed at extension ends of two second parts of an FPC are respectively electrically connected to a positive voltage terminal and a negative voltage terminal on the main board, and a protection circuit is disposed on the main board. Based on a structural feature that both the positive trace and the negative trace in the FPC on the battery side are arranged in a unipolar manner, problems such as a short circuit caused by tweezers, a short circuit caused by solder balls, or a short circuit caused by foreign objects on the FPC can be avoided, and a security risk like battery fire caused by a sustained short circuit is avoided.

During actual application, the battery that is based on a protection board assembly may be used in an application scenario that has a lightweight and thin design requirement, and may be specifically used in an electronic device including a rechargeable battery, for example, a mobile phone, a tablet computer, or a notebook computer.

According to the second aspect, this embodiment of this application further provides a first implementation of the second aspect. A charging chip is further disposed on the main board, and the charging chip is connected to the positive voltage terminal. During actual application, two charging chips are disposed. On a basis of increasing a charging power, a risk of local overheating may be reduced through load sharing, to improve safety of battery use.

During actual application, the charging chip may have a metal shielding cover, to avoid impact of electromagnetic crosstalk between the charging chips, and further assist in providing a heat dissipation capability, so as to ensure performance stability of the chips in a charging process, and quickly and stably implement charging at a high charging power.

According to the second aspect or the first implementation of the second aspect, this embodiment of this application further provides a second implementation of the second aspect. The protection circuit is electrically connected to the negative voltage terminal, and is disposed close to the negative voltage terminal. Based on a structural feature that the positive voltage terminal and the negative voltage terminal on the main board are disposed in a unipolar manner, the protection circuit is disposed close to the negative voltage terminal. In this way, a protection function is implemented based on a voltage and a current of the negative voltage terminal, and a corresponding intra-board trace on the main board is shortened, to reduce a link loss on the main board.

According to the second implementation of the second aspect, this embodiment of this application further provides a third implementation of the second aspect. The protection circuit is electrically connected between the charging chip and the positive voltage terminal, the protection circuit is disposed close to the positive voltage terminal, and the charging chip is disposed close to the protection circuit. In this way, the protection function is implemented based on a voltage and a current of the positive voltage terminal, and a corresponding intra-board trace can also be shortened, to reduce a link loss on the main board.

### BRIEF DESCRIPTION OF DRAWINGS

FIG. 1 is a diagram of an overall structure of a typical battery;
FIG. 2 is a diagram of a stacking and assembling relationship of a protection board assembly of the battery shown in FIG. 1;
FIG. 3 is a diagram of an assembly relationship of a mobile phone according to an embodiment of this application;
FIG. 4 is a diagram of an assembly relationship of another battery according to an embodiment of this application;
FIG. 5 is a diagram of an assembly relationship of another battery according to an embodiment of this application;
FIG. 6 is a diagram of a comparison relationship between a link length of an FPC shown in FIG. 5 and a link length of an FPC shown in a comparison example;
FIG. 7 is a diagram of an assembly relationship of another battery according to an embodiment of this application;
FIG. 8 is a diagram of an assembly relationship of another battery according to an embodiment of this application;
FIG. 9 is a diagram of an assembly relationship of another battery according to an embodiment of this application;
FIG. 10 is a diagram of an assembly relationship of another battery according to an embodiment of this application;
FIG. 11 is a diagram of lithium plating relationships of negative electrode plates of electrochemical cells with different quantities of negative electrode tabs; and
FIG. 12 is a diagram of an assembly relationship of another battery according to an embodiment of this application.

### DESCRIPTION OF EMBODIMENTS

Embodiments of this application provide a battery optimization solution, to effectively improve battery energy density, avoid a short-circuit risk, reduce battery internal resistance, and improve charging and discharging efficiency.

Generally, a battery used in an electronic device like a mobile phone or a tablet computer includes an electrochemical cell and a protection board assembly. The electrochemical cell is configured to supply power to a component of the electronic device, and a battery protection board is configured to protect battery safety, for example, provide protection functions for overcharge, overdischarge, overcurrent, short circuits, and the like, to avoid a safety and reliability problem in a battery charging and discharging process. The protection board assembly includes a circuit board and a corresponding protection component, and therefore a protection circuit for implementing a protection function is constructed. Herein, the protection circuit constructed based on the protection component may be implemented by using the conventional technology, and therefore details are not described in this specification.

The protection board assembly includes a circuit board and a corresponding protection component, and therefore a protection circuit for implementing a protection function is constructed. Configuration of the protection component needs to be selected according to a control logic design of the protection circuit. For example, the protection component may include components such as a current detection resistor, a transistor for controlling disconnection of a battery charge/discharge loop, a transient suppression diode for port surge protection, a protection chip for implementing fault detection such as battery overvoltage, undervoltage, and overcurrent, and a conventional resistor and capacitor required by a peripheral circuit of the chip. Herein, the protection circuit constructed based on the foregoing protection component may be implemented by using the conventional technology, and therefore details are not described in this specification.

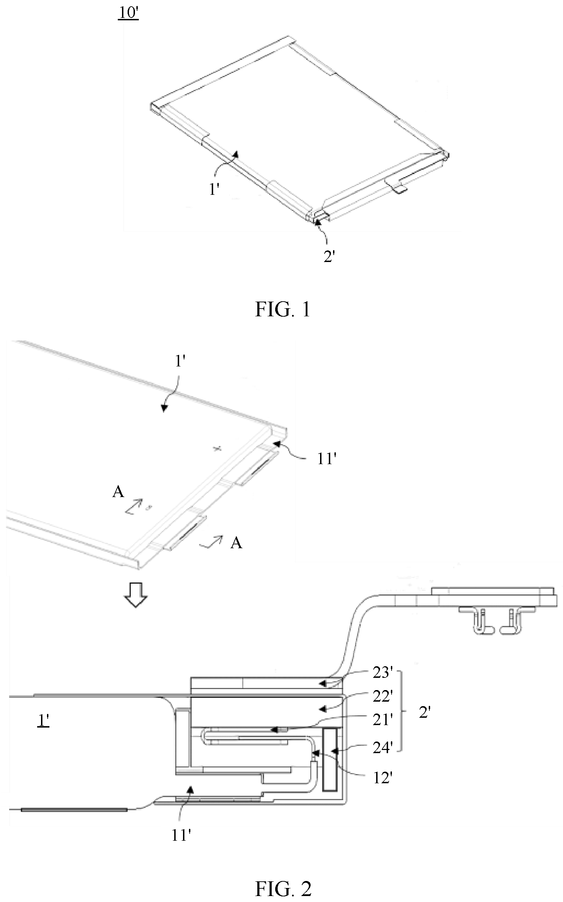

Refer to FIG. 1 and FIG. 2. FIG. 1 is a diagram of an overall structure of a typical battery 10'. An FPC 2' of the battery 10' is located on a head of an electrochemical cell 1', and is specifically stacked on a top seal 11' extending out from the electrochemical cell 1'. FIG. 2 is a diagram of a stacking and assembling relationship of the FPC 2'.

As shown in FIG. 2, an electrode tab 12' of the electrochemical cell 1' is welded below a PCB 22' through a U-shaped adapter plate 21', and is electrically connected to a load component through an FPC (flexible printed circuit, flexible printed circuit) 23' located above the PCB (printed circuit board, printed circuit board) 22', to form an electrical signal loop. A protection component 24' is disposed below the PCB 22' and is located on a front side of the electrode tab 12'. When a thickness of the electrochemical cell is reduced to be less than a specific value, the protection board assembly stacked on the top seal 11' exceeds a thickness of a main body of the electrochemical cell. In other words, stacked structural components of the FPC 2' cannot adapt to a thickness of a thin electrochemical cell. As a result, an overall thickness of the battery is large, and an additional battery space needs to be provided in an overall design for accommodation. This is not conducive to improvement of volume energy density of the battery.

In view of this, embodiments of this application provide a battery. No protection circuit is disposed in the battery, the battery may include an electrochemical cell and an FPC, a head of the electrochemical cell has a top seal, electrode tabs of the electrochemical cell extend out from the top seal, and at least two positive electrode tabs or at least two negative electrode tabs are disposed. The FPC includes a first part and two second parts, the first part of the FPC is stacked on the top seal in a width direction of the electrochemical cell, a first connection part that is electrically connected to the electrode tabs is disposed on the first part of the FPC, the two second parts are formed by respectively extending from two ends of the first part, and second connection parts that are electrically connected to a main board are disposed at extension ends of the two second parts. One of the second connection parts is connected to a positive trace in the FPC, to electrically connect to a positive voltage terminal on a main board, and the positive trace extends from the corresponding second connection part, through a corresponding second part, to a position that is of the first connection part and that is opposite to the positive electrode tab. The other second connection part is connected to a negative trace in the FPC, to electrically connect to a negative voltage terminal on the main board, and the negative trace extends from the corresponding second connection part, through a corresponding second part, to a position that is of the first connection part and that is opposite to the negative electrode tab. An inner extension end of the positive trace is spaced from an inner extension end of the negative trace.

In this way, shunting is implemented by increasing a quantity of electrode tabs, which can reduce impact of high current density in a charging and discharging process. Both the positive trace and the negative trace in the FPC are arranged in a unipolar manner, so that problems such as a short circuit caused by tweezers, a short circuit caused by solder balls, or a short circuit caused by foreign objects on the FPC can be avoided, and a security risk like fire caused by a sustained short circuit is avoided.

In addition, in comparison with an implementation in which each of the two sides includes a positive trace and a negative trace, in this implementation, traces on both sides are unipolar, and there is no need to reserve a spacing for an opposite-polarity trace. In a same routing width, traces can be fully covered with copper, to effectively reduce link impedance on the FPC side of the battery.

In addition, during actual application, a battery capacity can be effectively increased in a space of a specific size. For a battery compartment with a space of a same size, a volume space of the battery compartment can be fully used to arrange the electrochemical cell, to effectively increase volume energy density of the battery. In an application scenario of lightweight and thin products, exceeding out of a body outline of a lightweight and thin electrochemical cell can be avoided, so that this technology has a more prominent advantage.

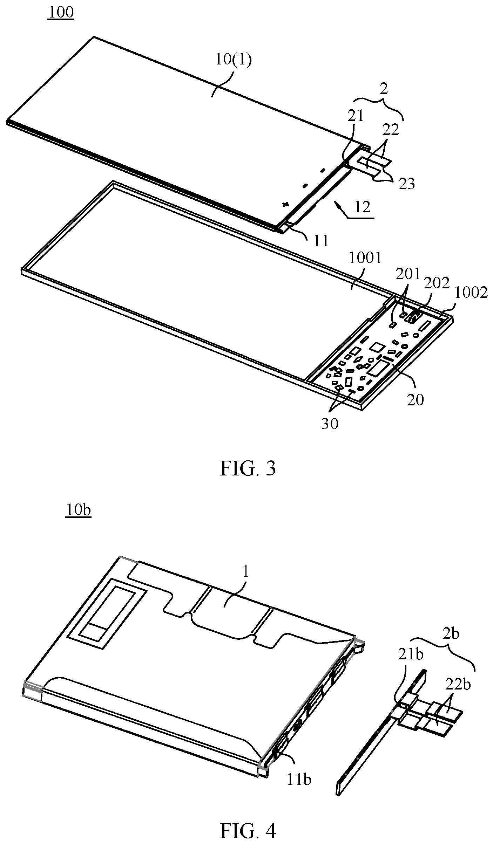

The battery layout solution provided in embodiments of this application may be applied to different scenarios that have a light weight and thinness design requirement for products, for example but not limited to, an electronic device having a rechargeable battery, for example, a mobile phone, a tablet computer, a notebook computer, a virtual reality (virtual reality, VR) terminal device, or an augmented reality (augmented reality, AR) terminal device. FIG. 3 is a diagram of a structure of a mobile phone according to an embodiment of this application.

As shown in FIG. 3, in a system architecture of a mobile phone 100, a battery 10, a main board 20, and an electronic component 30 are disposed inside an accommodation cavity of the mobile phone. An electrochemical cell 1 of the battery 10 is disposed in a battery compartment 1001, an FPC 2 is connected to a top of the electrochemical cell 1, and the FPC 2 is connected to the main board 20. The battery 10 may supply power to the main board 20, and may supply power to the electronic component 30 through the main board 20.

The FPC 2 of the battery 10 is connected to the electrochemical cell 1, and the FPC 2 includes a first part 21 and two second parts 22. In a width direction of the electrochemical cell 1, the first part 21 of the FPC is disposed in a stacking area above a top seal 11, and the first part 21 is electrically connected, through a first connection part, to electrode tabs 12 extending out from the top seal 11. The two second parts 22 of the FPC are formed by separately extending from the first part 21, and the second part 22 is electrically connected to the main board through a second connection part.

A structural pattern of the first part 21 adapts to the top seal 11 on a head of the electrochemical cell 1, so that a size occupied in a length direction of the battery can be appropriately controlled. A structural pattern of the second part 22 mainly adapts to a configuration requirement of an interface connected to the main board 20. It may be understood that a substrate structure of the FPC 2 is not limited to bending and folding arrangements shown in the figure.

In a specific implementation, the electrode tabs 12 (one positive electrode tab and two negative electrode tabs) extending out from the top seal 11 are electrically connected to the first connection part of the first part 21 of the FPC 2. The positive electrode tab is connected to a positive interface of the first connection part on the first part 21 of the FPC 2, and the two negative electrode tabs are connected to a negative interface of the first connection part on the first part 21 of the FPC. As an example rather than a limitation, the first connection part may be an electrode tab pad disposed on the first part 21 of the FPC 2. This is not limited in embodiments of this application.

As shown in FIG. 3, based on the extending arrangement of the second part 22, a protection component configured to construct a protection circuit 202 is located on a main board compartment 1002, that is, located outside the battery compartment 1001. No protection circuit is configured on the electrochemical cell 1 and the FPC 2. Herein, the protection circuit 202 may include device types such as a protection chip, a current detection resistor, a transistor, a transient suppression diode (a voltage regulator), a MOS (a protection board execution switch), and a conventional resistor and capacitor required by a peripheral circuit of the chip. In a specific implementation, a specific component and a quantity of configured components may be selected based on a function setting of the protection circuit. This is not limited in embodiments of this application.

In this implementation, the second connection part on the second part 22 of the FPC 2 is a first connector 23 disposed at an extension end of the second part, and the second part is inserted and snap-fitted, through the first connector 23, into a second connector 201 correspondingly disposed on the main board 20. In other words, an electrical connection between corresponding signal interfaces is established through BTB connectors. In other words, electrical connections to a positive voltage terminal and a negative voltage terminal on the main board 20 are implemented through two connectors that adapt to each other, to form an electrical signal loop. To be specific, the FPC 2 is electrically connected to the positive voltage terminal on the main board 20 through a positive connector, and is electrically connected to the negative voltage terminal on the main board 20 through a negative connector, to form the electrical signal loop.

In another possible implementation, the second connection part that is electrically connected to the main board may alternatively be a structure like a pad or a conducting wire. This is not limited in embodiments of this application.

In another specific implementation, the protection circuit 202 removed from the top seal 11 may alternatively be disposed on a sub-board (also referred to as a secondary board, which is not shown in the figure) of the mobile phone. The sub-board may be connected to the main board 20 through a flat cable, and a receiver, a button, a charging interface, and the like may be integrated on the sub-board. The protection circuit is disposed on the sub-board of the mobile phone, so that the protection component is disposed in a stacking area away from the top seal 11, to reduce a thickness in a position of the top seal.

To avoid a short circuit of positive and negative traces in the FPC 2 after the protection circuit is removed, which compromises safety and reliability of the battery in a charging and discharging process, in this implementation, in two first connectors 23 of the FPC 2, one first connector 23 is connected to the positive trace in the FPC 2, and is electrically connected to a second connector 201 at the positive voltage terminal on the main board 20, and the positive trace extends inward from the corresponding first connector 23, through a corresponding second part 22, to a position that is of the first connection part and that is opposite to the positive electrode tab. The other first connector 23 is connected to the negative trace in the FPC 2, and is electrically connected to a second connector 201 at the negative voltage terminal on the main board 20, and the negative trace extends inward from the corresponding first connector 23, through a corresponding second part 22, to a position that is of the first connection part and that is opposite to the negative electrode tab. Both the positive trace and the negative trace in the FPC 2 are arranged in a unipolar manner, so that a problem like a short circuit can be effectively avoided.

In the foregoing implementation, the top seal 11 is formed by extending in the length direction of the electrochemical cell. In a specific implementation, the top seal may alternatively extend out from the electrochemical cell and be bent in a thickness direction of the electrochemical cell. FIG. 4 is a diagram of an assembly relationship of another battery according to an embodiment of this application. To clearly show a difference and a relationship between this implementation and the embodiment described in FIG. 3, components or structures with a same function are illustrated with a same numeral in the figures.

As shown in FIG. 4, an FPC 2b of a battery 10b is connected to an electrochemical cell 1, and a top seal 11b on a head of the electrochemical cell 1 is bent after extending out, and is disposed in a thickness direction of the electrochemical cell 1. The FPC 2b of the FPC 2b includes a first part 21b and second parts 22b. Herein, in a width direction of the electrochemical cell 1, the first part 21b of the FPC 2b is stacked in a stacking area at an end part of the top seal 11, and is electrically connected, through a first connection part on the first part, to an electrode tab that extends out from the top seal 11. No protection circuit is configured on the electrochemical cell 1 and the FPC 2b, and a protection circuit is disposed on a main board (not shown in the figure).

In this way, a space occupied by the protection circuit in a length direction in a position of the top seal can be reduced, a space occupied by a protection component in the position of the top seal can be reduced, and volume energy density of the battery can still be effectively increased on a basis of meeting a light weight and thinness design requirement.

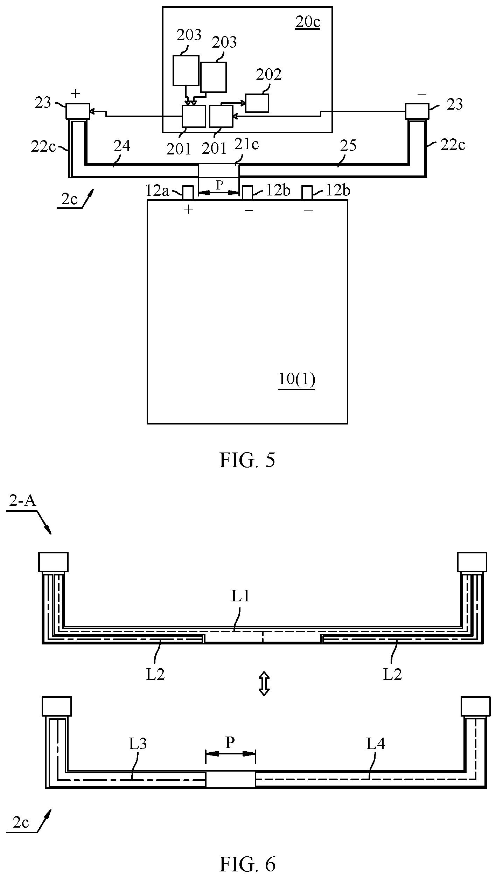

In addition, for a configuration manner in which the protection component for constructing the protection circuit is removed from the top seal 11 and is entirely disposed on the main board, to further reduce impact of high current density in a charging and discharging process, an implementation in which at least three electrode tabs are disposed may be used. FIG. 5 is a diagram of an assembly relationship of another battery according to an embodiment of this application. To clearly show differences and relationships between this implementation and the embodiments described in FIG. 3 and FIG. 4, components or structures with a same function are illustrated with a same numeral in the figures.

As shown in FIG. 5, an electrochemical cell 1 of a battery 10 includes three electrode tabs, is electrically connected to a main board 20c through an FPC 2c, to supply power to the main board 20c, and may supply power to an electronic component through the main board 20c. A protection circuit 202 and a charging chip 203 are disposed on the main board 20c, the protection circuit 202 is constructed by each protection component, and the charging chip 203 is configured to implement management and control of a charging process of the battery 10. Herein, to increase a charging power, two charging chips 203 may be configured, to reduce a risk of local overheating through load sharing, and improve safety of battery use.

In another implementation, the charging chip may be configured based on an overall design requirement of a product, but is not limited to the quantity of two shown in the figure. This is not limited in embodiments of this application.

In this implementation, the electrochemical cell 1 includes one positive electrode tab 12a and two negative electrode tabs 12b, and the positive electrode tab 12a and the negative electrode tabs 12b are sequentially spaced in a width direction of the electrochemical cell 1. In this way, an overall current bearing capacity of the battery can be improved, current density of a single electrode tab can be reduced, and technical assurance is provided to meet a requirement of using a high charging power, for example but not limited to an application scenario in which a charging power is 66 W or 100 W. In addition, a current path is dispersed by using a plurality of electrode tabs, so that battery internal resistance can be further reduced, to improve charging and discharging efficiency of the battery.

In another specific implementation, to improve charging and discharging performance, based on an actual overall design requirement of a product, more than three electrode tabs may alternatively be used instead of being limited to the quantity of three shown in the figure.

Two first connection parts on a first part 21c of the FPC 2c are separately electrically connected to the electrode tabs of the electrochemical cell 1, the first part 21c extends in the width direction of the electrochemical cell 1, and two second parts 22c respectively extend from two ends of the first part 21c.

In a specific implementation, in the width direction of the electrochemical cell 1, a size of the first part 21c may be greater than a size of the electrochemical cell 1 as shown in the figure. Certainly, in another possible implementation, in the width direction of the electrochemical cell 1, a size of the first part 21c may alternatively be consistent with a size of the electrochemical cell 1 or less than the size of the electrochemical cell 1. This may be specifically determined based on an actual product. Similarly, a size of the second part 22c may also be determined based on an actual requirement. This is not limited in embodiments of this application.

Second connection parts that are respectively disposed at extension ends of the two second parts 22c and that are electrically connected to the main board 20c are both first connectors 23. The two first connectors 23 are respectively inserted and snap-fitted into second connectors 201 that are correspondingly disposed on the main board 20c, to establish electrical connections of corresponding interfaces, in other words, are respectively electrically connected to a positive voltage terminal and a negative voltage terminal on the main board 20c, to form a power supply loop.

In other words, one of the two first connectors 23 is a first connector 23 at a positive terminal, and the other is a first connector 23 at a negative terminal, and the two connectors are respectively connected to a positive trace 24 and a negative trace 25 in the FPC 2c. Both the positive trace 24 and the negative trace 25 in the FPC 2c are arranged in a unipolar manner, so that problems such as a short circuit caused by tweezers, a short circuit caused by solder balls, or a short circuit caused by foreign objects on the FPC can be avoided, and a security risk like fire caused by a sustained short circuit is avoided.

As shown in the figure, the positive trace 24 extends from the first connector 23 at the positive terminal, through a corresponding second part 22c, to a position that is of the first part 21c and that is opposite to the positive electrode tab 12a, to be electrically connected to the positive electrode tab 12a; and the negative trace 25 extends from the first connector 23 at the negative terminal, through a corresponding second part 22c, to a position that is of the first part 21c and that is opposite to the two negative electrode tabs 12b, to be electrically connected to the negative electrode tabs 12b. Correspondingly, inner extension end s of the positive trace 24 and the negative trace 25 are spaced from and opposite to each other in the first part 21c of the FPC. In other words, there is a specific spacing P between an inner extension end of the positive trace 24 and an inner extension end of the negative trace 25.

An FPC 2-A in which two first connectors both can implement positive and negative connections to the main board is used as a comparison example, and the FPC 2c provided in this implementation can appropriately control a length of a link in the board. FIG. 6 is a diagram of a comparison relationship between a link length of the FPC shown in FIG. 5 and a link length of the FPC shown in the comparison example.

An upper figure in FIG. 6 shows a structure of the comparison example FPC 2-A. A negative trace path L1 of the comparison example FPC 2-A is shown by a dashed line in the figure, and a positive trace path L2 of the comparison example FPC 2-A is shown by a dotted line in the figure. A lower figure in FIG. 6 shows the FPC 2c shown in FIG. 5. A negative trace path L3 of the FPC 2c is shown by a dashed line in the figure, and a positive trace path L4 of the FPC 2c is shown by a dotted line in the figure. A comparison basis is that the two FPCs have approximately same positive current-carrying cross-sections and positive current-carrying cross-sections. As shown in the figure, positive current-carrying links of the two FPCs are approximately consistent. A length of a negative current-carrying link of the FPC 2c in this implementation is shorter. For a length difference between negative current-carrying links in the two solutions, refer to a size mark P. Therefore, this solution can reduce a link loss. In addition, compared with the positive and negative traces between which a trace spacing is reserved in the comparison example, traces on both sides of this implementation are unipolar, and there is no need to reserve a spacing for an opposite-polarity trace. In a same routing width, traces can be fully covered with copper, and link impedance on the FPC side of the battery may be reduced by about 10%.

Further, as shown in FIG. 5, in the two second connectors 201 on the main board 20c, one is inserted and snap-fitted into the first connector 23 at the positive terminal of the FPC 2c, and the charging chip 203 is connected to a second connector 201 that adapts to the positive terminal, and may be disposed close to the second connector 201; and the other is inserted and snap-fitted into the first connector 23 at the negative terminal of the FPC 2c, and the protection circuit 202 is connected to a second connector 201 that adapts to the negative terminal, and may be disposed close to the second connector 201. In this way, a corresponding intra-board trace on the main board 20c is shortened, to further reduce a link loss on the main board.

In the charging process, the charging chip 203 provides a safe and efficient charging process for the battery 10, and controls, based on a current status of the battery, a current flowing into the battery, to ensure that the battery is charged with an appropriate current, and avoid overcharge or overheat. A specific function of the charging chip 203 may be implemented according to the conventional technology. This is not limited in embodiments of this application.

Further, metal shielding covers (not shown in the figure) may be respectively disposed on the two charging chips 203 disposed close to the second connector 201 that adapts to the positive terminal, to avoid impact of electromagnetic crosstalk between the two charging chips 203. In addition, quick heat dissipation of the charging chips 203 can be implemented, and a heat dissipation capability is provided for assistance, to ensure performance stability of the chips in the charging process, and quickly and stably implement charging at a high charging power.

In addition, the protection circuit 202 is connected to the second connector 201 that adapts to the negative end, and may implement a corresponding protection function by detecting a voltage and a current of a negative electrode of the battery. For example, when the voltage of the negative electrode is higher than a preset threshold, the protection circuit 202 may send a signal to disconnect a charger (not shown in the figure) from the battery, to prevent overcharge. For another example, when the voltage of the negative electrode is lower than the preset threshold, the protection circuit 202 may disconnect a discharge path of the battery 10, to prevent overdischarge of the battery. A specific function of the protection circuit 202 may be implemented according to the conventional technology. This is not limited in embodiments of this application.

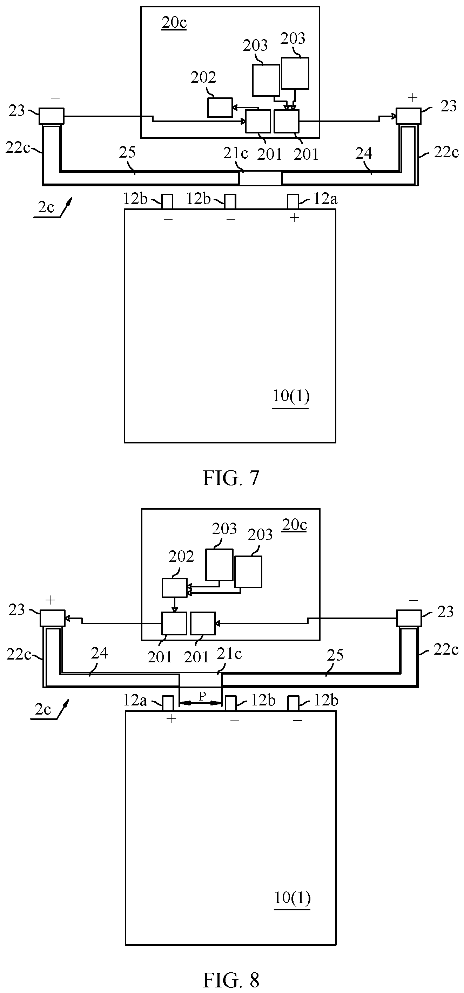

In the implementation described in FIG. 5, in the width direction of the electrochemical cell 1, the positive electrode tab 12a in the three electrode tabs is located on a left side of the electrochemical cell 1, and the two negative electrode tabs 12b are located on a right side of the electrochemical cell. In another specific implementation, a left-right relative position relationship between the positive electrode tab and the negative electrode tab may be adjusted. To be specific, the positive electrode tab is located on one side of a top seal of the electrochemical cell 1, and the negative electrode tab is located on the other side of the top seal of the electrochemical cell, so that traces in the FPC can be appropriately controlled, to ensure that connectors on a same side and the FPC are designed to be of a same polarity, thereby implementing a single-side single-polar connection. FIG. 7 is a diagram of an assembly relationship of another battery according to an embodiment of this application. To clearly show a difference and a relationship between this implementation and the embodiment described in FIG. 5, components or structures with a same function are illustrated with a same numeral in the figures.

As shown in FIG. 7, an electrochemical cell 1 includes two negative electrode tabs 12b and one positive electrode tab 12a, and the negative electrode tabs 12b and the positive electrode tab 12a are sequentially spaced in a width direction of the electrochemical cell 1. In comparison with the electrochemical cell described in FIG. 5, a main difference of this implementation lies in that, in the width direction of the electrochemical cell 1, the two negative electrode tabs 12b in the three electrode tabs are located on a left side of the electrochemical cell 1, and the positive electrode tab 12a is located on a right side of the electrochemical cell 1.

Other components and connection relationships may be the same as those of the electrochemical cell described in FIG. 5. Details are not described herein.

In the implementations described in FIG. 5 and FIG. 6, the protection circuit 202 is connected to the second connector 201 that adapts to the negative end, and implements a corresponding protection function based on a signal on the negative electrode side of the battery. In another specific implementation, the protection circuit 202 may alternatively be connected to the second connector 201 that adapts to the positive terminal.

FIG. 8 is a diagram of an assembly relationship of another battery according to an embodiment of this application. To clearly show a difference and a relationship between this implementation and the embodiment described in FIG. 5, components or structures with a same function are illustrated with a same numeral in the figures.

As shown in FIG. 8, a protection circuit 202 is connected between a charging chip 203 and a second connector 201 that adapts to a positive terminal, and may implement a corresponding protection function by detecting a voltage and a current of a positive electrode of the battery. A charging current output by the charging chip 203 may first pass through the protection circuit 202, then flow into the positive electrode of the electrochemical cell 1, and then flow out from a negative electrode of the electrochemical cell 1, to be connected to a system ground. Specifically, this may be implemented according to the conventional technology. Details are not described herein again.

Other components and connection relationships may be the same as those of the electrochemical cell described in FIG. 5. Details are not described herein.

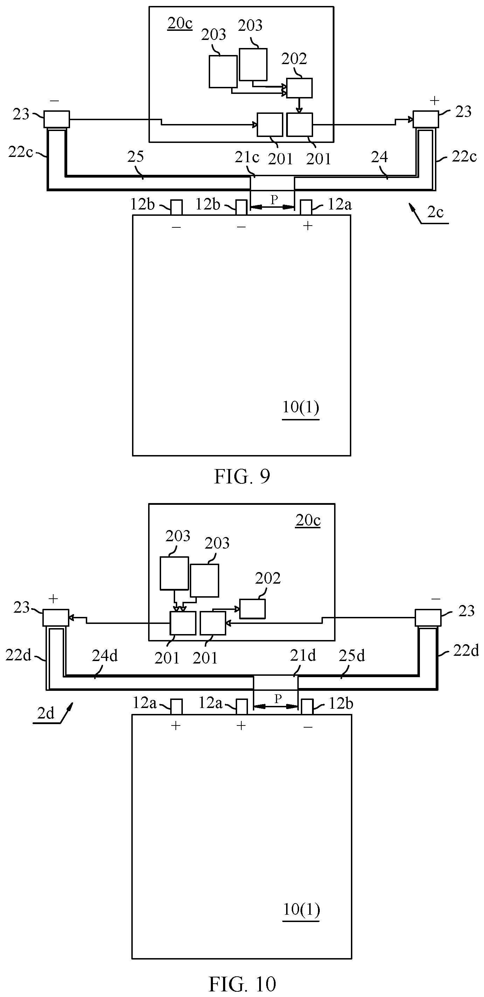

FIG. 9 is a diagram of an assembly relationship of another battery according to an embodiment of this application. To clearly show a difference and a relationship between this implementation and the embodiment described in FIG. 7, components or structures with a same function are illustrated with a same numeral in the figures.

As shown in FIG. 9, a protection circuit 202 is connected between a charging chip 203 and a second connector 201 that adapts to a positive terminal, and can also implement the foregoing protection function.

Other components and connection relationships may be the same as those of the electrochemical cell described in FIG. 10. Details are not described herein.

In both the implementations described in FIG. 5 and FIG. 7, the three electrode tabs of the electrochemical cell 1 includes one positive electrode tab 12a and two negative electrode tabs 12b. In another specific implementation, the three electrode tabs may alternatively be configured as two positive electrode tabs and one negative electrode tab. FIG. 10 is a diagram of an assembly relationship of another battery according to an embodiment of this application. To clearly show differences and relationships between this implementation and the embodiments described in FIG. 5 and FIG. 7, components or structures with a same function are illustrated with a same numeral in the figures.

As shown in FIG. 10, an electrochemical cell 1 includes two positive electrode tabs 12a and one negative electrode tab 12b, and the positive electrode tabs 12a and the negative electrode tab 12b are sequentially spaced in a width direction of the electrochemical cell 1. Correspondingly, a positive trace 24d in an FPC 2d extends from a first connector 23 at a positive terminal, through a corresponding second part 22d, to a position that is of a first part 21d and that is opposite to the two positive electrode tabs 12a, to be electrically connected to the positive electrode tabs 12a; and a negative trace 25d extends from a first connector 23 at a negative terminal, through a corresponding second part 22d, to a position that is of the first part 21d and that is opposite to the negative electrode tabs 12b, to be electrically connected to the negative electrode tabs 12b.

Other components and connection relationships may be the same as those of the electrochemical cell described in FIG. 5. Details are not described herein.

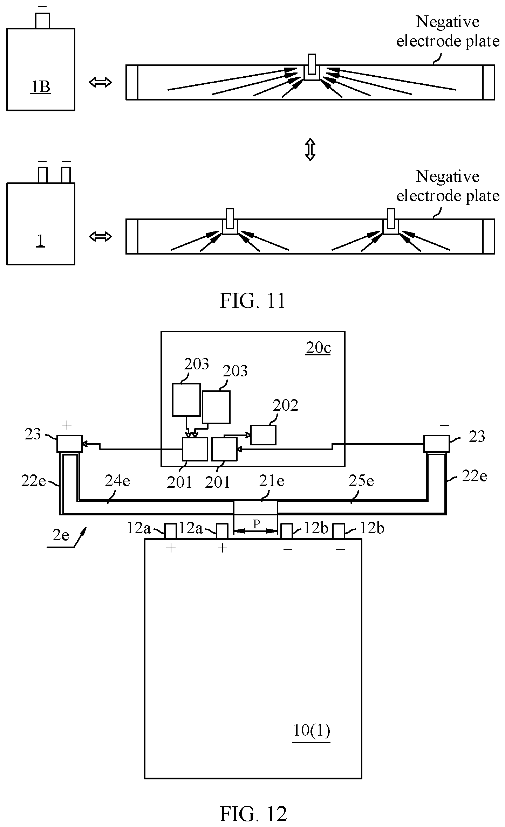

In comparison with the implementation described in FIG. 10, in the solutions described in FIG. 5 and FIG. 7, a quantity of negative electrode tabs is increased, so that under a same charging load, local current density of a negative electrode plate of the battery is reduced. This can effectively reduce a phenomenon of lithium plating near a welding area of the negative electrode tab of the battery. Specifically, FIG. 11 is a diagram of lithium plating relationships of negative electrode plates of electrochemical cells with different quantities of negative electrode tabs.

In FIG. 11, an upper figure shows a negative electrode plate corresponding to one negative electrode tab disposed in an electrochemical cell 1B, and a lower figure shows a negative electrode plate corresponding to the two negative electrode tabs disposed in the electrochemical cell 1 shown in FIG. 5. During charging, electrons of an external power supply flow to a negative electrode of the battery through a circuit, the negative electrode captures the electrons and combines the electrons with lithium ions, and the lithium ions flow into the negative electrode plate from a side of a positive electrode plate, and are embedded into a negative electrode material.

Under the same charging load, the solution shown in the upper figure is an implementation in which a current is input through one negative electrode tab, and high current density increases electrochemical polarization. As a result, a reduction reaction rate of the lithium ions on a negative electrode surface cannot match a lithium ion supply rate (as shown by an arrow in the figure), and therefore a phenomenon of lithium plating occurs in a local area. In the solution shown in the lower figure, a current is input through two negative electrode tabs, so that a problem of excessively high current density in a local area of a single negative electrode tab can be avoided. In this way, based on current distribution, electrochemical polarization increased due to high current density can be avoided, a lithium ion embedding rate can be ensured, and lithium plating performance can be effectively reduced.

In all the implementations described in FIG. 5 and FIG. 7 to FIG. 10, the electrochemical cell includes three electrode tabs. In another specific implementation, the electrochemical cell may alternatively include four electrode tabs. FIG. 12 is a diagram of an assembly relationship of another battery according to an embodiment of this application. To clearly show a difference and a relationship between this implementation and the embodiment described in FIG. 5, components or structures with a same function are illustrated with a same numeral in the figures.

As shown in FIG. 12, an electrochemical cell 1 includes two positive electrode tabs 12a and two negative electrode tabs 12b, and the positive electrode tabs 12a and the negative electrode tabs 12b are sequentially spaced in a width direction of the electrochemical cell 1. Correspondingly, a positive trace 24e in an FPC 2e extends from a first connector 23 at a positive terminal, through a corresponding second part 22e, to a position that is of a first part 21e and that is opposite to the two positive electrode tabs 12a, to be electrically connected to the positive electrode tabs 12a; and a negative trace 25e extends from a first connector 23 at a negative terminal, through a corresponding second part 22e, to a position that is of the first part 21e and that is opposite to the negative electrode tabs 12b, to be electrically connected to the negative electrode tabs 12b.

Other components and connection relationships may be the same as those of the electrochemical cell described in FIG. 5. Details are not described herein.

An embodiment of this application further provides an electronic device. The electronic device includes a main board and a battery. The battery may be the battery described in FIG. 3 to FIG. 5, FIG. 7 to FIG. 10, and FIG. 11.

In addition to mobile terminal devices such as the mobile phone, the tablet computer, and the notebook computer, the electronic device may further include an electronic device including a rechargeable battery, for example, a personal digital assistant (personal digital assistant, PDA), a wearable device, a smart television, a virtual reality (virtual reality, VR) device, and augmented reality (augmented reality, AR).

It should be understood that other corresponding functions of the electronic device are not a core invention point of this application. Therefore, details are not described in this specification.

In addition, ordinal numbers "first", "second", and the like used in this specification are merely used to describe compositions or structures with a same function in the technical solutions. It may be understood that use of the ordinal numbers does not constitute an understanding limitation on the technical solution claimed in this application.

The foregoing descriptions are merely preferred implementations of the present invention. It should be noted that a person of ordinary skill in the art may make several improvements and modifications without departing from the principle of the present invention, and the improvements and modifications shall be considered as falling within the protection scope of the present invention.

## Claims

1. A battery, wherein no protection circuit is disposed in the battery, the battery comprises an electrochemical cell and an FPC, a head of the electrochemical cell has a top seal, a positive electrode tab and a negative electrode tab of the electrochemical cell separately extend out from the top seal, and at least two positive electrode tabs or at least two negative electrode tabs are disposed;
the FPC comprises a first part and two second parts, the first part is stacked on the top seal in a width direction of the electrochemical cell, a first connection part that is separately electrically connected to the positive electrode tab and the negative electrode tab is disposed on the first part, the two second parts are formed by respectively extending from two ends of the first part, and second connection parts are respectively disposed at extension ends of the two second parts;
one of the second connection parts is connected to a positive trace in the FPC, to electrically connect to a positive voltage terminal on a main board, and the positive trace extends inward from the corresponding second connection part, through a corresponding second part, to a position that is of the first connection part and that is opposite to the positive electrode tab;
the other second connection part is connected to a negative trace in the FPC, to electrically connect to a negative voltage terminal on the main board, and the negative trace extends inward from the corresponding second connection part, through a corresponding second part, to a position that is of the first connection part and that is opposite to the negative electrode tab; and
an inner extension end of the positive trace is spaced from an inner extension end of the negative trace.

2. The battery according to claim 1, wherein in the width direction of the electrochemical cell, the positive electrode tab is located on one side of the top seal, and the positive electrode tab is located on the other side of the top seal.

3. The battery according to claim 2, wherein one positive electrode tab is disposed and two negative electrode tabs are disposed.

4. The battery according to claim 2, wherein two positive electrode tabs are disposed and one negative electrode tab is disposed.

5. The battery according to claims 1 to 4, wherein the second connection part is a BTB connector.

6. An electronic device, wherein the electronic device comprises a main board and a battery, the battery is the battery according to claims 1 to 5, the battery is separately electrically connected to a positive voltage terminal and a negative voltage terminal on the main board through the disposed second connection parts, and a protection circuit is disposed on the main board.

7. The electronic device according to claim 6, wherein a charging chip is further disposed on the main board, and the charging chip is connected to the positive voltage terminal.

8. The electronic device according to claim 7, wherein two charging chips are disposed.

9. The electronic device according to claim 8, wherein the charging chip has a metal shielding cover.

10. The electronic device according to any one of claims 7 to 9, wherein the protection circuit is electrically connected to the negative voltage terminal, the protection circuit is disposed close to the negative voltage terminal, and the charging chip is disposed close to the positive voltage terminal.

11. The electronic device according to any one of claims 7 to 9, wherein the protection circuit is electrically connected between the charging chip and the positive voltage terminal, the protection circuit is disposed close to the positive voltage terminal, and the charging chip is disposed close to the protection circuit.
